# EUROPÄISCHE PATENTANMELDUNG

(11) **EP 1 669 657 A1**
(43) Veröffentlichungstag der Anmeldung: **14.06.2006**
(21) Anmeldenummer: 05027242.6
(22) Anmeldetag: 13.12.2005
(51) Int. Cl.: F16L 37/107, F16L 37/248

(54) **Festkupplung und Festkupplungssystem**

(30) Priorität: 13.12.2004 DE 202004019316 U
(71) Anmelder: Max Widenmann KG Armaturenfabrik, 89537 Giengen/Brenz (DE)
(72) Erfinder: Ambrosi, Johann, 89542 Herbrechtingen (DE)
(74) Vertreter: Degwert, Hartmut

(57) **Zusammenfassung**

Festkupplung, die axial schließt und kompatibel ist mit einer symmetrischen Schlauchkupplung aus zwei Kupplungshälften, die je aus einem Schlauchstutzen und einem auf dem Schlauchstutzen drehbar angebrachten Knaggenring bestehen. Die Festkupplung ist auf einen Kupplungsring (1) mit angeformtem Rohransatz (19) reduziert und dadurch gekennzeichnet, daß der Kupplungsring (1) ohne eigene Knaggen ausgeführt und in seiner Dicke auf das für den Eingriff der Knaggen (2) einer kompatiblen Gegenkupplung notwendige axiale Maß reduziert ist.

## Beschreibung

Die Erfindung betrifft eine Festkupplung, die axial schließt und kompatibel ist mit einer symmetrischen Schlauchkupplung aus zwei Kupplungshälften, die je aus einem Schlauchstutzen und einem auf dem Schlauchstutzen drehbar angebrachten Knaggenring bestehen. Ferner betrifft die Erfindung ein Festkupplungssystem mit einer erfindungsgemäßen Festkupplung.

Festkupplungen sind beispielsweise aus dem Feuerwehrwesen bekannt. Sie sind kompatibel zu Schlauchkupplungen, deren symmetrische Kupplungshälften Knaggenringe aufweisen, welche gegenüber den jeder Hälfte zugeordneten Schlauchstutzen drehbar sind und deren Knaggen mit eine Steigung aufweisenden Leisten des Knaggenringes der jeweils anderen Kupplungshälfte bajonettverschlußartig in Eingriff gebracht werden können. Die Drehung der Knaggenringe bewirkt eine axiale Annäherung der Schlauchstutzen, so daß in deren Stirnseiten angeordnete Dichtungsringe ohne gegenseitige Drehung axial gegeneinander gepreßt werden. Bei der zur Schlauchkupplung kompatiblen Festkupplung werden die kraftübertragenden Knaggen und Leisten sowie die den Dichtungsring kammernde Nut einteilig ausgeführt, weil die kennzeichnenden Funktionsmerkmale des Systems mit nur einem drehbaren Knaggenring pro Kupplungsverbindung gewährleistet bleiben. Die Festkupplungen dienen hauptsächlich als Anschlußkupplung zu festen Rohrleitungen oder Armaturen, weshalb die Rückseite oftmals mit Gewinde, aber auch mit Profilierungen für andere Verbindungsarten wie z.B. Schweißen, Löten oder Nieten ausgestattet ist.

Derartige als System "Storz" lange bekannte und hinsichtlich der Anschlußmaße beispielsweise in DIN 14301 ff genormte Kupplungen sind vorzugsweise zur Förderung von Löschwasser bei einer Druckstufe von PN 16 oder in einzelnen Fällen sogar PN 40 konzipiert, weshalb aus Gründen der Festigkeit die paarweise Anordnung von Knaggen und Leisten - bei größeren Kupplungsgrößen sogar dreifach - und den dadurch vierfach (bzw. sechsfach) auftretenden Kraftübertragungsflächen gerechtfertigt ist. Das einfach zu handhabende und zuverlässige Schnellkupplungssystem hat inzwischen viele andere Einsatzbereiche in der Industrie gefunden, wo außer flüssigen z.B. auch Feststoffe auf dem Schüttgutsektor gefördert werden, und dies bei Drücken, die im Allgemeinen kaum 2 bar übersteigen. Zu den anderen Einsatzbereichen, in denen üblicherweise von niedrigeren als im Feuerwehreinsatz üblichen Drücken ausgegangen werden kann, gehören beispielsweise die bloße Wasserentnahme an Hydranten zum Beispiel in der Baubranche oder die Förderung von Schüttgut wie zum Beispiel Holz-Pellets mittels Druckluft.

Der Erfindung liegt die Aufgabe zugrunde, für einen derartigen Anwendungsfall die Festkupplung kompatibel zur genormten Schlauchkupplung so zu verändern, daß Technologien mit geringen Werkzeugkosten und einer Formgebung mit geringem Bearbeitungsaufwand - wie insbesondere Gießen - eine kostengünstige Herstellung auch in Anbetracht von minimalem Werkstoffeinsatz ermöglichen, sowie ein Festkupplungssystem zu schaffen, in dem die erfindungsgemäße Festkupplung vorteilhaft eingesetzt werden kann.

Zur Lösung dieser Aufgabe stellt die Erfindung eine Festkupplung mit den Merkmalen des Anspruchs 1 bereit. Bevorzugte Ausführungsformen sind den Unteransprüchen zu entnehmen.

Die Erfindung wird nun unter Bezugnahme auf die beigefügten Zeichnungen in mehreren Ausführungsbeispielen näher erläutert. In den Zeichnungen zeigen:
- Figur 1 eine rückseitige Draufsicht eines Kupplungsrings der Festkupplung;
- Figur 2 einen Schnitt entlang Linie A-A in Fig. 1;
- Figur 3eine stirnseitige Draufsicht des Kupplungsrings;
- Figur 4 einen Teilschnitt einer Ausführungsvariante des Kupplungsrings;
- Figur 5 eine schematische Seitenansicht eines Festkupplungssystems;
- Figur 6 einen Ausschnitt aus einer stirnseitigen Draufsicht eines Kupplungsrings in einer bevorzugten Ausführungsform;
- Figur 7 einen Teilschnitt einer weiteren Ausführungsvariante des Kupplungsrings;
- Figur 8 einen Teilschnitt einer weiteren Ausführungsvariante des Kupplungsrings;
- Figur 9 einen Ausschnitt aus einer rückseitige Draufsicht einer Ausführungsvariante des Kupplungsrings;
- Figur 10 eine schematische Seitenansicht einer Variante des Festkupplungssystems.

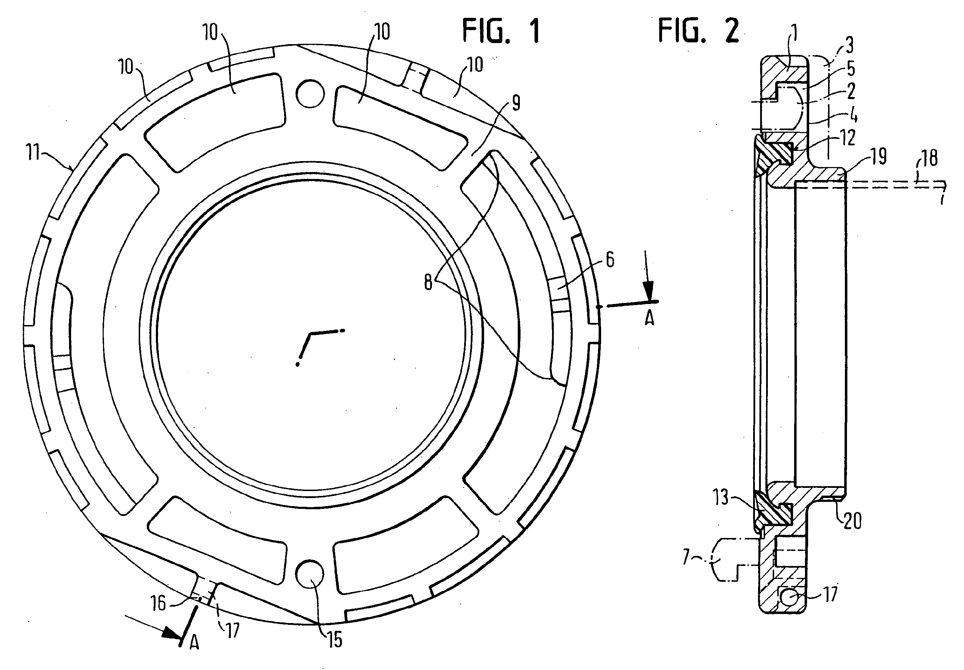

Die in den Figuren 1 und 2 dargestellte Festkupplung hat einen Kupplungsring 1, dessen Dicke auf das der Eingriffslänge der Knagge 2 der Gegenkupplung erforderliche Mindestmaß reduziert ist, wodurch der bei herkömmlichen Kupplungen vorhandene und dort stabilisierende geschlossene Boden 3 als rückwärtige Begrenzung 4 der für den Eingriff der Knaggen 2 der Gegenkupplung nötigen Kupplungsnut 5 entfällt. Dadurch kann auch die profilierte Leistenunterseite 6 als Kontaktfläche mit den Knaggen 2 der Gegenkupplung zur Kraftübertragung als Fertigkontur direkt abgeformt werden. Durch Verzicht auf eigene Knaggen 7 wird die Kraftübertragung von sonst üblichen vier oder sechs auf zwei oder drei Kontaktflächen halbiert. Figur 1, welche eine rückseitige Draufsicht auf den Kupplungsring ist, zeigt Materialeinsparungen 10 im Durchmesserbereich der Kupplungsnut 5 auf etwa der Hälfte des Umfangs und am Außendurchmesser 11 umlaufend durch Profilierung des Ringvolumens nach festigkeitsrelevanten und gießtechnischen Gesichtspunkten. Bohrungen 15 dienen lokalen Befestigungszwecken. Zur Steigerung der Stabilität der Festkupplung ist vorzugsweise die Leistenlänge 8 in Umfangsrichtung gegenüber der "Storz"-Kupplung reduziert und endet - auch zur Kupplungswegbegrenzung - an einer Radialrippe 9. In radialen Rippen 16 ist jeweils eine Bohrung 17 ausgeführt. Diese können zum Sichern eines in Figur 1 nicht dargestellten Verschlußdeckels genutzt werden, wie weiter unten erläutert.

Figur 2 ist eine Schnittansicht entlang der Linie A-A in Figur 1. Sie zeigt die Kupplungsnut 5 für den Eingriff der Knaggen 2 der Gegenkupplung. Knaggen 7 der herkömmlichen "Storz"-Kupplungen, die in der erfindungsgemäßen Festkupplung entfallen, sind zur besseren Verdeutlichung angedeutet. Eine Dichtungsringnut 12 nimmt einen Profildichtungsring 13 auf. Der Querschnitt des auch zu Saugzwecken geeigneten Profildichtungsring 13 ist wie dargestellt für den Einsatz im niederen Druckbereich so abgeändert, daß bei gewährleisteter Dichtfunktion das Drehmoment für das Ankuppeln der Gegenkupplung niedriger ausfällt und normalerweise sogar ohne Kupplungsschlüssel gekuppelt werden kann. Die Kupplungsrückseite beinhaltet je nach Befestigungsart des weiterführenden Leitungsrohres 18 einen zylindrischen Rohransatz 19, wobei Montage erleichternde Markierungen und/oder Merkmale 20, wie Vertiefungen, Aussparungen, Abflachungen u. ä., soweit möglich bereits bei der Formgestaltung eingebracht sind.

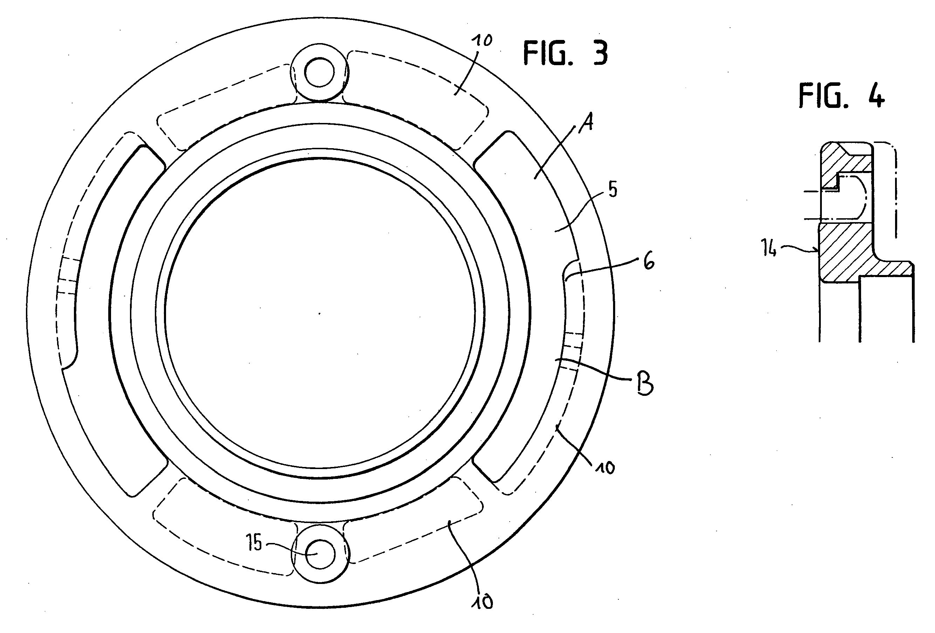

Figur 3 zeigt in der stirnseitigen Draufsicht auf den Kupplungsring die Kupplungsnut 5 mit der Leiste 6 und angedeutet die rückseitigen Materialeinsparungen 10 im Durchmesserbereich der Kupplungsnut. Diese umfassen den gesamten Bewegungsbereich der Knaggen 2 der Gegenkupplung, d.h. einen Einführungsbereich A, in dem die Knaggen 2 in die Kupplungsnut eingeführt werden, und einen Bereich B der Kupplungsleiste, der auch als Kraftübertragungsbereich bezeichnet werden kann.

Figur 4 zeigt eine Variante im Bereich der Abdichtung. Statt des Profildichtungsring 13 in einer Dichtungsringnut 12 wie in Figur 2 ist hier nur eine metallische Planfläche 14 ausgeführt.

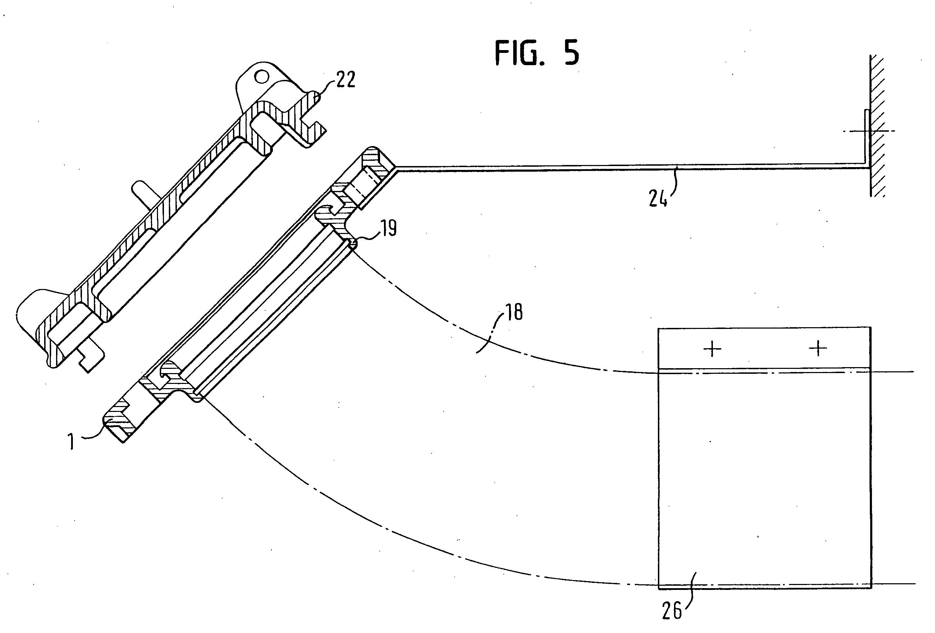

Figur 5 zeigt ein erfindungsgemäßes Festkupplungssystem. Das Festkupplungssystem beinhaltet neben der Festkupplung 1 und dem Verschlußdeckel 22 normalerweise auch ein Leitungsrohr 18. Das Leitungsrohr 18 ist im einfachsten Fall ein gerader Rohrstutzen, der an einem Ende mit dem Rohransatz 19 mechanisch fest verbunden wird, z.B. durch eine Nietverbindung. Der Rohrstutzen wird dann durch eine Öffnung der Gebäudewand eingesetzt, so daß der Kupplungsring an der Außenfläche des Gebäudes zur Anlage kommt. Mittels durch die Bohrungen 15 eingesetzter Schrauben und Wanddübeln wird dann die Festkupplung an der Gebäudewand befestigt.

Wenn die Festkupplung in einem Kellerschacht untergebracht wird, ist die Rohrleitung 18 vorzugsweise gekrümmt ausgeführt, wie in Fig. 5 gezeigt. Weiterer Bestandteil des Festkupplungssystems ist dann eine Halterung 24, die mit ihrem einen, abgewinkelten Ende an einer Hauswand befestigt ist und an deren anderem, freien Ende der Kupplungsring 1 durch eine Schraubverbindung befestigt ist. Das gekrümmte Leitungsrohr 18 wird mit einem die Hauswand durchragenden Rohrstutzen durch eine Rohrschelle 26 verbunden, die mit einer Innengummierung ausgestattet ist. Zur Vermeidung elektrostatischer Aufladung werden die so verbundenen Rohrabschnitte mit einer Überbrückungslasche elektrisch leitend verbunden.

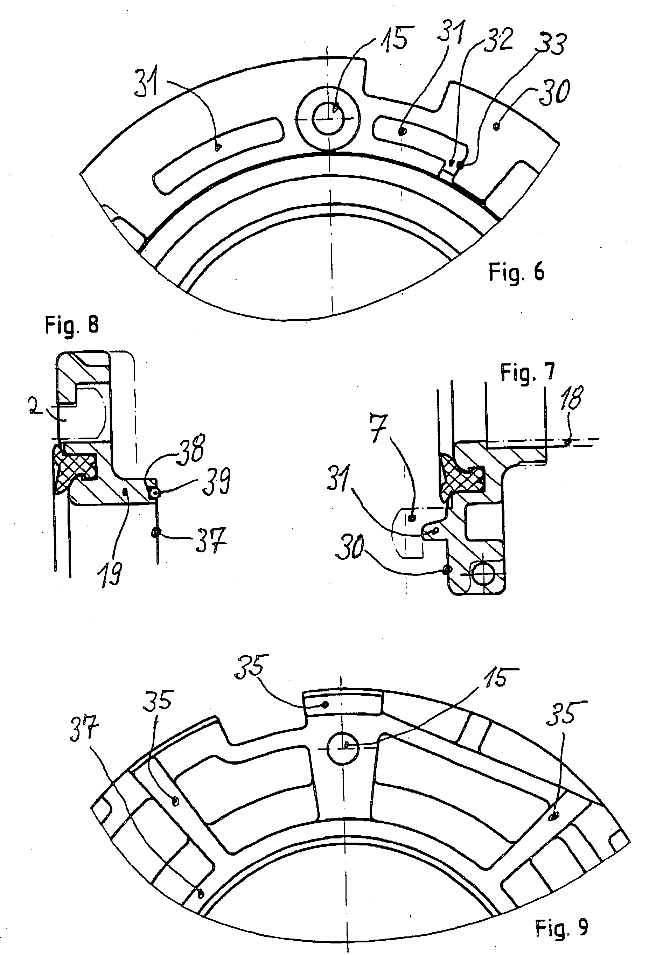

Figur 6 zeigt einen Ausschnitt einer Draufsicht einer Ausführungsform der Festkupplung. Da die entfallenen Knaggen 7 auch eine Zentrierfunktion haben, erhält die Festkupplung dafür ersatzweise auf einer Planfläche 30, die in Richtung der Gegenkupplung zeigt, vorstehende und im Bereich der Befestigungsbohrungen 15 unterbrochene Ringsegmente 31, die wiederum an einer Seite ein verbreitertes Ende 32 aufweisen. Dabei entsehen radiale Planflächen 33. Figur 7 zeigt einen Teilschnitt eines Kupplungsrings mit einem der Ringsegmente 31. Zum Vergleich bzw. zur Orientierung ist wiederum eine entfallene Knagge 7 angedeutet.

Figur 8 zeigt als Variante der Festkupplung bei nicht benötigtem Leitungsrohr 18 an einer Planfläche 37 des zylindrischen Rohransatzes 19 einen Einstich 38 zur Aufnahme eines Dichtringes 39. Führt die Leitung im Ausnahmefall nicht durch eine Gehäusewand, entfällt im Kupplungssystem das Leitungsrohr 18 und die Festkupplung wird in der Variante mit integriertem Dichtring 39 im rückseitigen Planeinstich 38 direkt an eine Behälterwand montiert.

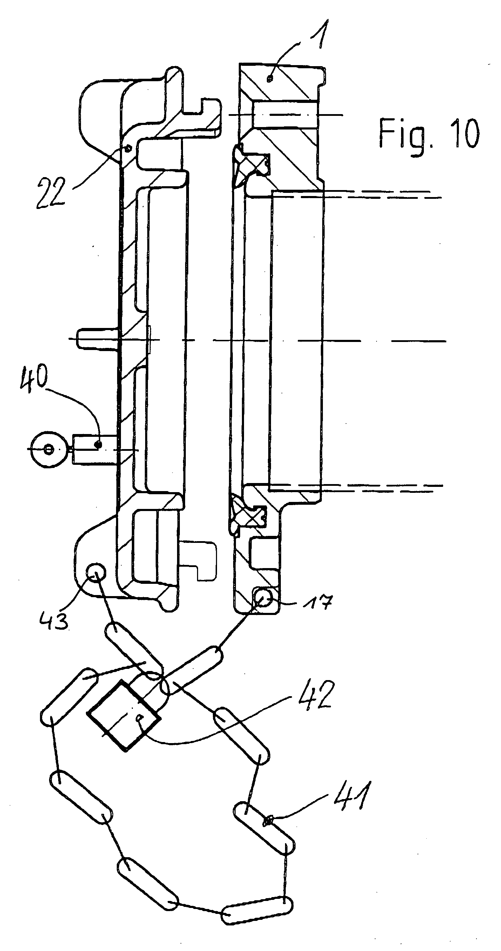

Figur 9 zeigt einen Ausschnitt aus einer rückseitigen Draufsicht einer Ausführungsvariante des Kupplungsrings. Zur Vermeidung von Deformationen beim Befestigen der Festkupplung bilden in dem dargestellten Ausführungsbeispiel Teile 35 einer die Schraubenlöcher 15 umgebenden Verrippung mit der Planfläche 37 des zylindrischen Rohransatzes 19 eine Ebene.

Figur 10 zeigt im Schnitt einen Kupplungsring 1 mit Verschlußdeckel 22. Zum Sichern des Verschlußdeckels 22 ist eine Kette 41 gegen Verlieren durch das Loch 17 am Kupplungsring und durch ein Loch 43 des Verschlußdeckels 22 gezogen. Zusätzlich kann die Festkupplung damit gegen unbefugtes Öffnen gesichert werden. Hierzu wird die Kette mittels Vorhängeschloß 42 verkürzt. Mit einem Zylinderschloß 40 kann der Verschlußdeckel 22 an einer der radialen Planflächen 33 (Figur 6) in seiner Verschlußstellung gesichert werden.

## Patentansprüche

1. Festkupplung, die axial schließt und kompatibel ist mit einer symmetrischen Schlauchkupplung aus zwei Kupplungshälften, die je aus einem Schlauchstutzen und einem auf dem Schlauchstutzen drehbar angebrachten Knaggenring bestehen, wobei die Festkupplung auf einen Kupplungsring (1) mit angeformtem Rohransatz (19) reduziert ist,
**dadurch gekennzeichnet, daß** der Kupplungsring (1) ohne eigene Knaggen ausgeführt und in seiner Dicke auf das für den Eingriff der Knaggen (2) einer kompatiblen Gegenkupplung notwendige axiale Maß reduziert ist.

2. Festkupplung nach Anspruch 1, **dadurch gekennzeichnet, daß** der Kupplungsring (1) mit Kupplungsnuten (5) für die Knaggen (2) der kompatiblen Gegnkupplung versehen ist, die auf der Seite des Rohransatzes (19) offen sind.

3. Festkupplung nach Anspruch 1 oder 2, **dadurch gekennzeichnet, daß** der Kupplungsring (1) eine glatte stirnseitige Ringfläche zum Zusammenwirken mit einem Dichtring der kompatiblen Gegenkupplung aufweist.

4. Festkupplung nach einem der vorstehenden Ansprüche, **dadurch gekennzeichnet, daß** der Kupplungsring (1) mit Kupplungsleisten (6) für die Knaggen (2) der kompatiblen Gegenkupplung versehen ist, die in Umfangsrichtung gegenüber den entsprechenden Leisten der kompatiblen Gegenkupplung eine reduzierte Länge aufweisen.

5. Festkupplung nach Anspruch 4, **dadurch gekennzeichnet, daß** die Kupplungsleisten (6) des Kupplungsrings (1) jeweils durch eine angeformte radiale Rippe (9) begrenzt sind.

6. Festkupplung nach Anspruch 4 oder 5, **dadurch gekennzeichnet, daß** der Kupplungsring (1) in Umfangsrichtung zwischen den Kupplungsnuten (5) mit materialsparenden Ausnehmungen (10) versehen ist.

7. Festkupplung nach einem der vorstehenden Ansprüche, **dadurch gekennzeichnet, daß** der Kupplungsring (1) an seinem Außenumfang (11) mit materialsparenden Ausnehmungen (10) versehen ist.

8. Festkupplungssystem mit einer Festkupplung nach einem der vorstehenden Ansprüche 1 bis 7 und einem abnehmbaren Verschlußdeckel (22), **dadurch gekennzeichnet, daß** der Kupplungsring (1) und der Verschlußdeckel (22) radiale Rippen (16) mit Bohrungen (17, 43) für die Sicherung mit einem Schloß (42) aufweisen.

9. Festkupplungssystem mit einer Festkupplung nach einem der vorstehenden Ansprüche 1 bis 7 und einer gebäudeseitigen Halterung, an der der Kupplungsring (1) befestigt ist, **dadurch gekennzeichnet, daß** der Kupplungsring (1) wenigstens eine axiale Bohrung (15) zur Befestigung an der Halterung mittels einer in die Bohrung eingesetzten Schraube aufweist.

10. Festkupplungssystem mit einer Festkupplung nach einem der vorstehenden Ansprüche 1 bis 7 und einer gebäudeseitigen Rohrleitung (18), die an den Kupplungsring (1) anschließt, **dadurch gekennzeichnet, daß** der Rohransatz (19) des Kupplungsrings (1) mit wenigstens einem Formgestaltungselement (20) wie Markierung, Vertiefung, Aussparung oder Abflachung als Montagehilfe für die Befestigung an der gebäudeseitigen Rohrleitung versehen ist.

11. Festkupplungssystem mit einer Festkupplung nach einem der vorstehenden Ansprüche 1 bis 7 und einer gebäudeseitigen Rohrleitung (18), die an den Kupplungsring (1) anschließt, **dadurch gekennzeichnet, daß** der Rohransatz (19) des Kupplungsrings (1) mechanisch mit einem Ende eines gebäudeseitigen Rohrstutzens fest verbunden ist, daß der Rohrstutzen durch eine Öffnung einer Gebäudewand einsetzbar ist und daß der Kupplungsring an die Außenfläche der Gebäudewand ansetzbar und daran befestigbar ist.
